# EUROPEAN PATENT APPLICATION

(11) **EP 2 449 872 A1**
(43) Date of publication of application: **09.05.2012**
(21) Application number: 11188244.5
(22) Date of filing: 08.11.2011
(51) Int. Cl.: A01D 34/82, A01D 75/18, A01F 12/16, A01F 21/00, A01F 29/16, F16P 3/12

(54) **Agricultural machine with a safety device**

(30) Priority: 09.11.2010 IT UD20100201
(71) Applicant: Tonutti Wolagri SpA con Socio Unico, 33047 Remanzacco (UD) (IT)
(72) Inventor: Tonutti, Carletto, 33019 Tricesimo (UD) (IT)
(74) Representative: Petraz, Gilberto Luigi

(57) **Abstract**

Agricultural machine (11) with at least its own rotation member (40) that rotates during functioning and with a safety device comprises a mechanical sensor (25) disposed in the front part of the agricultural machine (11), and able to be actuated also by a possible obstacle present in its path. The device also comprises a stopping mechanism (37) connected to the mechanical sensor (25) and able to stop the rotation member (40) when the mechanical sensor (25) is actuated by the possible obstacle.

## Description

### FIELD OF THE INVENTION

The present invention concerns an agricultural machine with a safety device. In particular, the safety device for agricultural machines is applied on harvesting apparatuses of a known type, for example rotary presses.

### BACKGROUND OF THE INVENTION

Safety devices for agricultural machines are known (see for example US-A-3.989.198), in particular for apparatuses for harvesting fodder such as for example rotary presses. Such machines are often supplied with a safety clutch, which intervenes when a certain power supplied to the harvesting apparatus is not sufficient to move the members of the apparatus, for example due to an obstruction in the mechanism. By intervening, the clutch prevents all the power, or drive torque, from being transferred to the harvesting apparatus, thus preventing any damage being caused to the apparatus itself and/or to objects or other which might accidentally be in contact with the members of the apparatus. When the obstruction has been removed, the clutch restarts transmitting all the power supplied to the harvesting apparatus.

A second device is known for the safety of agricultural machines and/or harvesting apparatuses for fodder. Such apparatuses are often supplied with a safety bolt for the cardan joints. The bolt is sized so that it breaks if the force for transmission on the cardan joints exceeds a certain threshold. In this case too, the safety system is devised to act only in dangerous situations, and therefore when the force on the cardan joints exceeds a certain threshold and is such as to reveal anomalies in the apparatus, possibly because a foreign object has been picked up by the members of the machine or for other reasons. After the safety bolt breaks, it must be replaced so that the agricultural machine is again made operational.

A safety device is also known that comprises a stop mechanism, associated with the cardan joint, which is commanded by a command member positioned on the machine and able to be actuated manually by the operator. This implies a complication in the production for the manufacturers of the machines, as they have to adapt the stop mechanism to the characteristics of the cardan joint. In fact, depending on the type of cardan joint (for example if it is a safety cardan joint, with disk clutch or clutch with cams), it is necessary to modify the machine every time a determinate choice is made. Moreover, this known safety device has the disadvantage that it is not actuated automatically when the machine finds an obstacle in its path, whether it is a person or an animal, but has to be actuated directly by the operator, and therefore the correct functioning of the device and the prevention of accidents is directly connected to the quick reactions of the operator.

One disadvantage of known safety systems is that in some machines, for example in rotary presses, there is an apparatus for harvesting fodder which in some operating cases may partly flood, but without making the clutch operational or breaking the safety bolt. In such situations, in order to be able to intervene safely, it is necessary to switch off the machine and remove the excess material. However, among the operators of these machines, there exists the dangerous habit of intervening to remove the excess material even when the members of the agricultural machines or rotary press are moving. This behavior by the operators may cause very serious accidents, in some cases fatal, because, with the members of the agricultural machine moving, there is a risk of being caught up in the harvesting apparatus and being dragged inside the machine. The force necessary for introducing the fodder into the machine is such that a clutch on the harvesting members must be sized in such a way that it is not possible to intervene if an operator or an animal is dragged in by the moving members.

One purpose of the present invention is to obtain a safety device for agricultural machines which can stop the machine automatically, that is, without needing any intervention by an operator, when the machine meets an accidental obstacle on its path, which obstacle may possibly be a person or an animal.

Another purpose according to the present invention is to obtain a safety device that cooperates with known safety devices to give a greater safety to the operator also in the event of irregular interventions, that is, with the members of the agricultural machines moving.

The Applicant has devised, tested and embodied the present invention to overcome the shortcomings of the state of the art and to obtain these and other purposes and advantages.

The word "comprise" and variants of the word such as "comprises" and "comprising" are used here to indicate the inclusion of a clearly expressed whole or clearly expressed wholes but not the exclusion of any other whole or any other wholes, unless in the context or in use an exclusive interpretation of the word is required.

### SUMMARY OF THE INVENTION

The present invention is set forth and characterized in the independent claim, while the dependent claims describe other characteristics of the invention or variants to the main inventive idea.

In accordance with the above purposes, an agricultural machine with a safety device according to the present invention has at least a rotation member able to rotate during functioning of said agricultural machine. By rotation member we mean any rotary element of the agricultural machine, for example a transmission member, such as a shaft or other. Hereafter we will use the term "the agricultural machine's own transmission member" to identify a transmission member that is part of the machine and cannot be disconnected therefrom in its normal functioning and operativity.

The safety device comprises a mechanical sensor, disposed in the front part of the agricultural machine, and able to be actuated by a possible obstacle present in the machine's path. The safety device for agricultural machines also comprises a stopping mechanism connected to the mechanical sensor, and able to be selectively actuated for stopping the rotation member through mechanical interference when the mechanical sensor is actuated by the obstacle. By obstacle, here and hereafter in the description, we mean a person or any object or animal that finds itself in the path of the agricultural machine.

The safety device cooperates with known safety devices to give a greater safety to the operator also in the event of irregular interventions, that is, with the members of the agricultural machine still moving. The safety device according to the present invention, when it is accidentally hit or thrust voluntarily, acts on the moving members of the machine, forcing the clutch or the safety bolt of the cardan joints and/or other known safety devices to intervene.

The safety device is generally activated when the agricultural machine hits an obstacle frontally, but in some circumstances it is possible for the operator himself, finding himself near the machine and identifying a dangerous situation, to act voluntarily on the safety device so as to stop the moving members of the machine.

According to one form of embodiment of the present invention, the mechanical sensor comprises a bar disposed substantially horizontal to cover substantially the whole width of the agricultural machine, or the greater part of it. In this way it is possible to intercept any obstacle whatsoever present on the path of the agricultural machine, provided it is a predetermined minimum height, for example 500-600 millimeters.

According to a variant of the invention, the bar is attached to two arms, pivoted on a support structure of the agricultural machine so as to be able to rotate by a determinate angle between an inactive position and an operating position.

According to another variant of the invention, the bar is normally kept in the inactive position by an elastic element and is able to be rotated under thrust toward the operational position. Then, hitting the bar frontally with a certain force, it rotates by the angle needed to actuate the safety device.

According to other variants of the invention, the bar is connected to the stopping mechanism by means of a tie rod able to actuate a sliding element. The sliding element in turn is able to actuate the stopping mechanism. The stopping mechanism can be of different types, for example it may be a braking mechanism.

According to another variant, the bar can be connected to the sliding element by means of a steel cable sliding in a sleeve.

According to other variants of the invention, the stopping mechanism comprises a ratchet gear, which in turn comprises a stopping lever able to interact with a toothed sector attached to the rotation member. The stopping lever, during the actuation of the safety device, enters into contact with the toothed sector and stops it, consequently also preventing the movement of the rotation member.

According to another variant of the invention, the sliding element is able to cooperate with the stopping lever in order to actuate the safety system. To give an example, not restrictive of the field of protection of the present invention, the sliding element could constrain the stopping lever in a specific position. During the actuation of the safety system, the sliding element could slide and release the stopping lever, which would interact with the toothed sector.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a lateral view of an agricultural machine with relative safety device;
- fig. 2 is a perspective view of the safety device;
- fig. 3 is a lateral view of the safety device in a non-operating condition;
- fig. 4 is a lateral view of the safety device in an operating condition.

To facilitate comprehension, the same reference numbers have been used, where possible, to identify identical common elements in the drawings. It is understood that elements and characteristics of one form of embodiment can conveniently be incorporated into other forms of embodiment without further clarifications.

### DETAILED DESCRIPTION OF A PREFERENTIAL FORM OF EMBODIMENT

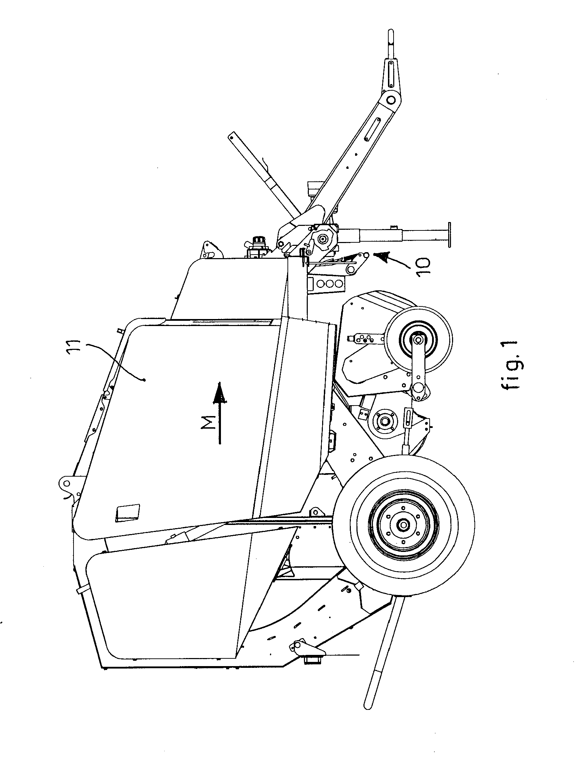

With reference to fig. 1, a safety device 10 is shown mounted on the front part of an agricultural machine 11 of a known type, for example a rotary press.

During the operational step, the agricultural machine 11 is moved by a self-propelled agricultural mean in the direction indicated by the arrow M (fig. 1).

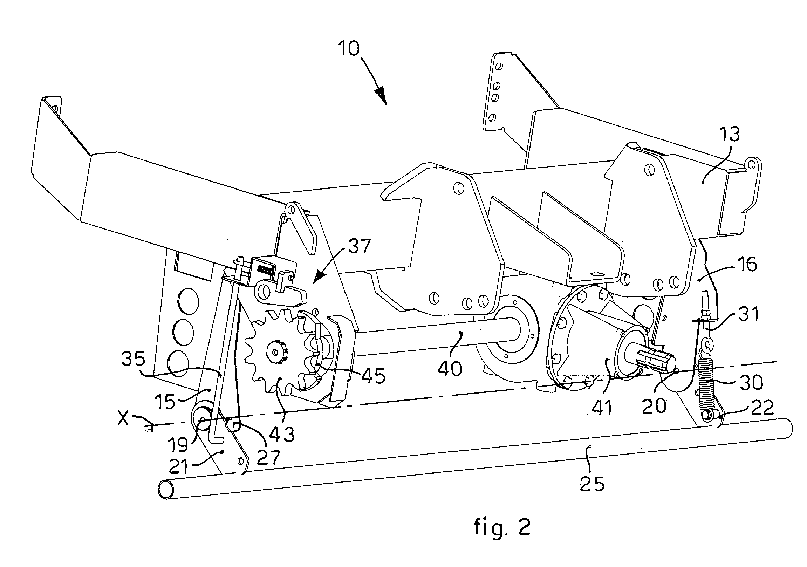

The safety device 10 comprises a support structure 13 (fig. 2), for example made of metal, provided with two front fins 15 and 16, parallel to each other, on which are pivoted, by means of two pins 19 and 20, two arms 21 and 22 of a bar 25, which functions as the safety element. In this way, the bar 25 is able to rotate around the axis X passing through the pins 19 and 20.

The front fin 15 has a stop tooth 27 which, cooperating with the arm 21, defines the inactive position of the bar 25, limiting the rotation in an anti-clockwise direction.

The bar 25 is normally held in the inactive position by a return spring 30, which at one end is connected to the arm 22 and at the other end is connected to an adjustment screw 31, attached on the front fin 16 of the support structure 13.

The end of a rod 35 is attached on the arm 21, which rod 35 interacts with a ratchet gear 37 that comprises a toothed sector 45 and a stopping lever 64. The toothed sector 45 is attached to one end of a rotary member of the machine, which in this case is a transmission shaft 40 which takes its rotatory motion from a transmission unit 41. The latter is connected to a known drive system, not shown, usually through a cardan joint and relative cardan transmission shaft. The transmission members downstream of the transmission unit 41, that is, the transmission shaft 40, a toothed wheel 43 described hereafter, and possibly other rotary members not shown, constitute the agricultural machine's own elements for the transmission of motion. In the present description and claims, the term "own elements" distinguishes the motion transmission elements that are part of the agricultural machine 11 from others that are not part of it, and disposed upstream of the transmission unit 41, that is, upstream of the possible cardan transmission unit.

The toothed wheel 43, which is solid with the toothed sector 45, is able to transmit motion to the members of the agricultural machine 11, of a known type and not shown in the drawings.

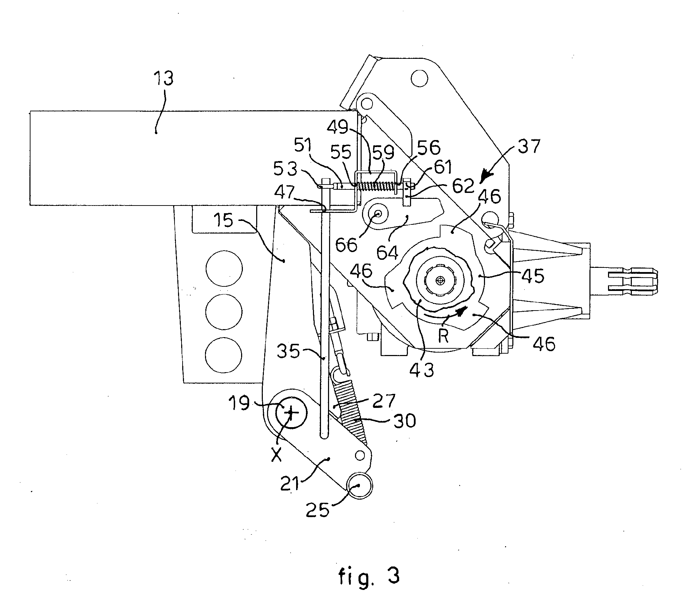

The upper end of the rod 35 is guided in a hole 47 (fig. 3), made on a metal supporting sheet 49 attached on the support structure 13, and is normally inserted in an eyelet 53 of a pin 51. The latter is able to slide axially in two through holes 55 and 56 made on the supporting sheet 49, and is normally kept thrust toward the rod 35 by a spring 59.

The end of the pin 51 opposite the eyelet 53 is inserted in a through hole 61 made on a fin 62 of the stopping lever 64.The latter is pivoted on a pin 66 and, due to gravity, tends to rotate in a clockwise direction, toward the toothed sector 45.

According to a variant, not shown in the drawings, the clockwise rotation of the stopping lever 64 can be promoted by a spring.

The toothed sector 45 is provided with three teeth 46, angularly offset by 120° with respect to each other, and is able to rotate in an anti-clockwise direction together with the transmission shaft 40 when the agricultural machine 11 is working.

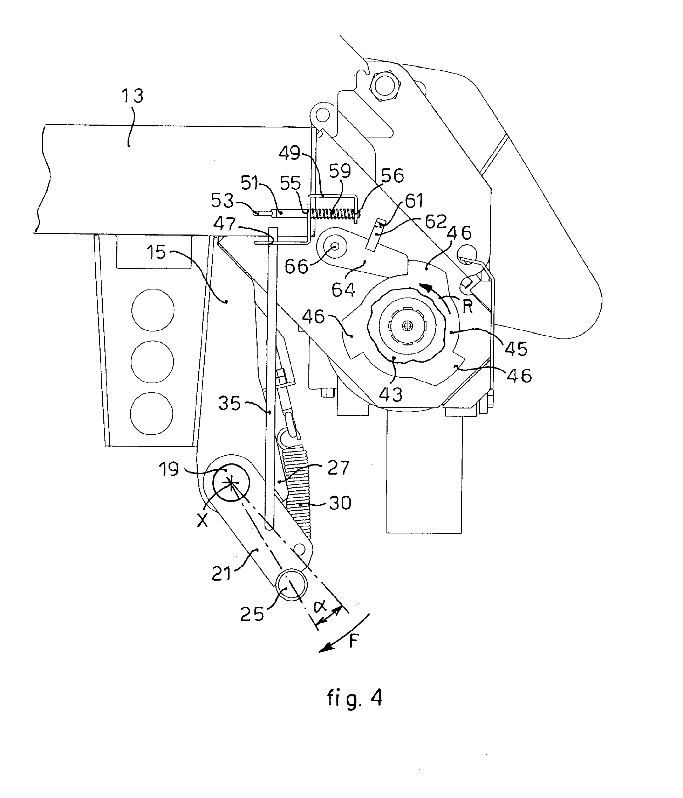

The safety device 10 as described heretofore functions as follows. When the bar 25 is hit frontally, a force acts on it that makes it rotate in a clockwise direction (fig. 4), as indicated by F, opposing the load force of the spring 30. If the rotation of the bar 25 is greater than a determinate angle α, for example comprised between 15° and 25°, the movement of the arm 21 makes the rod 35 lower, causing its end to exit from the seating of the eyelet 53 of the pin 51. Consequently the pin 51, thrust by the spring 59, will slide longitudinally through the through holes 55 and 56 of the supporting sheet and moving in the direction of the rod. In its displacement, the pin 51 exits from the seating of the hole 61 on the fin 62 of the stopping lever 64, freeing it. The stopping lever 64 can therefore descend, rotating in a clock-wise direction due to gravitational force, or advantageously, in some variants of the present invention, due to an elastic element that acts upon it. Due to the rotation suffered, the stopping lever 64 enters into contact with the toothed sector 45, rotating around its own axis in an anti-clockwise direction, as indicated by the arrow R, until one of the three teeth 46 of the toothed sector 45 impacts frontally mechanically with the end of the stopping lever 64 (fig. 4) thus causing the rotation of the toothed sector 45 to be stopped and consequently also that of the transmission shaft 40 and the toothed wheel 43, which in turn will advantageously be connected with the other members of the agricultural machine 11.

When activated, the safety device 10 for agricultural machines 11 prevents the machine 11 from operating, stopping the moving apparatuses and thus making the agricultural machine 11 safe.

It is clear that modifications and/or additions of parts may be made to the safety device for agricultural machines as described heretofore, without departing from the field and scope of the present invention. It is also clear that, although the present invention has been described with reference to some specific examples, a person of skill in the art shall certainly be able to achieve many other equivalent forms of safety device for agricultural machines, having the characteristics as set forth in the claims and hence all coming within the field of protection defined thereby.

## Claims

1. Agricultural machine (11) having its own rotation member (40) able to rotate during the functioning of said agricultural machine (11), **characterized in that** it comprises a safety device having a mechanical sensor (25) disposed in the front part of said agricultural machine (11), and able to be actuated also by a possible obstacle present in the path of the latter, and a stopping mechanism (37) comprising an interference element (64) connected to said mechanical sensor (25) and able to be selectively actuated for mechanically interfering with a toothed element (45) directly associated with said rotation member (40) for stopping said own rotation member (40) when said mechanical sensor (25) is actuated by said obstacle.

2. Agricultural machine as in claim 1, **characterized in that** said mechanical sensor (25) comprises a bar disposed substantially horizontal so as to cover substantially the whole width of said agricultural machine (11), or the greater part of it.

3. Agricultural machine as in claim 2, **characterized in that** said bar (25) is attached to two arms (21, 22) pivoted on a support structure (13) of said agricultural machine (11) so as to be able to rotate at a determinate angle (α) between an inactive position and an operating position.

4. Agricultural machine as in claim 2 or 3, **characterized in that** said bar (25) is normally maintained in said inactive position by an elastic element (30) and is able to be rotated under thrust toward said operating position.

5. Agricultural machine as in claim 2, 3 or 4, **characterized in that** a rod (35) connects said bar (25) to said stopping mechanism (37).

6. Agricultural machine as in claim 5, **characterized in that** said rod (35) is able to actuate a sliding element (51), which is able to actuate said stopping mechanism (37).

7. Agricultural machine as in claim 1, **characterized in that** said interference element comprises a stopping lever (64) able to interact with said toothed sector (45).

8. Agricultural machine as in claim 6, **characterized in that** said sliding element (51) is a pin able to cooperate with said stopping lever (64) for freeing it when the stopping mechanism (37) is actuated.

9. Agricultural machine as in claim 1, **characterized in that** said toothed sector (45) is provided with three teeth (46), angularly offset by 120° with respect to each other.
